# FASCICULE DE BREVET EUROPEEN

(11) **EP 4 609 046 B1**
(45) Date de publication et mention de la délivrance du brevet: **08.07.2026**
(21) Numéro de dépôt: 23783888.3
(22) Date de dépôt: 05.10.2023
(51) Int. Cl.: E05D 3/12, E05D 15/10, E05D 7/04, B64C 1/14

(54) **ATTACHE DE FIXATION AVEC UN SYSTÈME DE RÉGLAGE ET UN DISPOSITIF DE BLOCAGE SÉCURISÉ DU SYSTÈME DE RÉGLAGE**
VORRICHTUNG ZUR SICHEREN VERRIEGELUNG EINES VERSTELLSYSTEMS EINES BEFESTIGUNGSELEMENTS
DEVICE FOR SECURELY LOCKING AN ADJUSTMENT SYSTEM OF A FASTENER

(30) Priorité: 25.10.2022 FR 2211097
(43) Date de publication de la demande: 03.09.2025
(73) Titulaire: Latecoere, 31500 Toulouse (FR)
(72) Inventeur: DEVILLEZ, Sébastien, 31240 Saint Jean (FR); MARTIN, Gildas, 31240 l'Union (FR)
(74) Mandataire: Junca, Eric
(86) Numéro de dépôt international: PCT/EP2023/077516
(87) Numéro de publication internationale: WO 2024/088721

(56) Documents cités:
- WO-A1-2022/162090
- CN-A- 105 090 208
- CN-A- 113 124 038
- US-A- 3 368 602

## Description

### DOMAINE TECHNIQUE

L'invention se rapporte à une attache de fixation pour un ouvrant avec un dispositif destiné à bloquer et à sécuriser par verrouillage un système de réglage de cette attache de fixation, ainsi qu'à un système mécanique d'ouverture/fermeture d'ouvrant équipé de cette attache de fixation. Notamment des ouvrants de véhicules - aéronefs, trains, navires - sont destinés à être attachés puis positionnés grâce à un dispositif de réglage, ce réglage étant bloqué pour conserver le positionnement recherché.

L'invention se rapporte également à un procédé d'installation d'un ouvrant sur un bâti utilisant un tel système mécanique d'ouverture/fermeture.

Dans le domaine aéronautique en particulier, les portes et les trappes d'un aéronef sont des ouvrants dont le réglage de positionnement est réalisé pour ajuster et aligner l'ouvrant avec le bâti - ici le fuselage -permettant d'obtenir de meilleures performances aérodynamiques.

### ÉTAT DE LA TECHNIQUE

De manière générale, des éléments filetés permettent d'assurer l'installation et la fixation de l'ouvrant ainsi que le réglage de cette installation réalisée par des modifications légères du positionnement de cette installation qui alignent l'ouvrant sur la structure d'accueil. Le verrouillage de ces éléments filetés est traditionnellement assuré par des contre-écrous vissés avec les écrous sur ces éléments comme décrit dans le document WO2022/162090.

Les contre-écrous présentent l'avantage de s'adapter directement sur les éléments filetés. Les contres écrous peuvent cependant se desserrer d'où le besoin d'utiliser un verrouillage mécanique comme l'installation de fil-frein dans le filetage, ce fil-frein venant verrouiller l'écrou mécaniquement. Cependant la mise en place d'un fil-frein et le verrouillage est longue car chaque fil-frein est enroulé et chaque écrou est percé pour permettre au fil-frein de passer. De plus, pendant les phases de maintenance ou de modification du réglage, le fil-frein est coupé et n'est donc pas réutilisable, ayant pour conséquence des déchets de fils, un coût supplémentaire de remplacement du fil-frein ainsi qu'une procédure de remplacement longue. Cette opération est d'autant plus délicate que dans les applications aéronautiques, les ouvrants sont souvent installés dans des espaces exigus et difficiles d'accès. L'utilisation de contre-écrous est donc peu adapté aux contraintes d'installation des ouvrants.

Le brevet US 3,368,602 décrit une vis autobloquante dont l'ensemble vis-écrou résultant est particulièrement adaptée pour résister aux vibrations. En effet, de telles vibrations engendrent des micros-déplacements de l'écrou qui se désolidarise alors de la vis et entrainent un désassemblage de la structure que l'ensemble vis-écrou consolidait. Les document CN105090208 et CN113124038 décrivent d'autres types de vis autobloquante dont l'écrou vient s'emboiter sur une rondelle crantée qui empêche ainsi l'écrou de se dévisser. Cependant ces vis autobloquantes ont pour fonction de serrer plus ou moins l'assemblage fixe de deux éléments de structure sans perte des éléments vis et écrou. Lorsque l'assemblage est moins serré, un jeu est créé entre la vis et l'écrou et les éléments assemblés sont alors mobiles l'un par rapport à l'autre : ils ne sont donc pas verrouillés ni réglés l'un par rapport à l'autre.

Des goupilles fendues installées au cœur des éléments filetés sont également utilisées comme moyen de blocage et de verrouillage. Ces goupilles fendues étant localisées à l'intérieur des éléments filetés, elles peuvent être utilisées dans des espaces limités. Cependant, ce système de verrouillage présente l'inconvénient de limiter de façon significative le nombre de position de réglage afin de ne pas fragiliser la tenue sous charge de ces éléments. De plus l'insertion des goupilles demandent que l'alignement des pièces puissent être vérifié visuellement ce qui restent difficile à accomplir dans un endroit exigu.

Il existe également des dispositifs basés sur des éléments déformés (rondelles pliables) mais qui limitent le nombre possible de réglage avant remplacement.

### EXPOSE DE L'INVENTION

Afin de remédier aux inconvénients de l'état de la technique exposés ci-dessus, l'invention a pour objectif principal de permettre un blocage rapide et sécurisé d'une fixation filetée ainsi qu'une installation facile de ce moyen de blocage dans un environnement réduit.

Pour ce faire, l'invention prévoit de réaliser une attache de fixation pour ouvrant avec un dispositif de blocage en extrémité d'un élément fileté tel que mentionné ci-dessus, tout en s'affranchissant d'aléser cet élément fileté, un tel alésage conduirait à une augmentation de son diamètre ou une dégradation de ses performances de tenue d'ouvrant.

Plus précisément la présente invention décrite à travers la revendication 1 a pour objet une attache de fixation pour ouvrant avec un dispositif de blocage sécurisé d'un système de réglage de ladite attache de fixation. Cette attache est reliée à un encadrement par un support et comporte au moins une tige, chaque tige étant enfichée dans un manchon de réglage et solidaire de ce manchon par un moyen de blocage en translation. Chaque manchon de réglage présente :
- un corps cylindrique avec un filetage extérieur en vis-à-vis d'un filetage intérieur du support, et
- une extrémité de réglage dont une rotation entraine une translation du manchon de réglage.

Le dispositif de blocage comporte une rondelle cannelée en translation le long de chaque manchon de réglage. Un moyen de rappel reliée à l'extrémité de réglage du manchon de réglage maintient la rondelle cannelée au contact d'une contre-cannelure de configuration complémentaire et solidaire du support d'attache. La rondelle cannelée est mobile entre deux positions :
- une position de blocage dans laquelle la rondelle cannelée est engagée dans la contre-cannelure, solidaire en rotation par rapport au manchon de réglage et sécurisée par une poussée du moyen de rappel ;
- une position libérée dans laquelle la rondelle cannelée est immobilisée à distance « d » de la contre-cannelure, cette distance « d » étant suffisante pour s'affranchir du contact entre la rondelle cannelée et la contre-cannelure tout en permettant la rotation du manchon de réglage.

Avantageusement, le blocage est assuré par le contact entre la rondelle cannelée et la contre-cannelure. Ce contact est réalisé sans serrage, s'affranchissant ainsi de tout outillage de serrage, le blocage étant ainsi réalisable dans des espaces réduits. De plus le moyen de rappel permet de sécuriser le blocage par verrouillage de la rondelle cannelée sur la contre-cannelure.

Avantageusement également, le dispositif de blocage sécurisé est composé de pièces simples qui s'installent en extrémité du manchon de réglage : l'installation est donc facilitée lors de l'assemblage de la fixation. La mise en place du dispositif de blocage et son utilisation sont donc rapides tout en garantissant une qualité de blocage par l'engagement des cannelures.

Selon des formes de réalisation préférées prises seule ou en combinaison :
- le moyen de rappel est un ressort de compression en appui sur l'extrémité de réglage du manchon ;
- la rondelle cannelée comporte une surface d'appui du ressort de compression ;
- la surface d'appui de la rondelle cannelée comporte une collerette de traction ;
- la rondelle cannelée comporte au moins un ergot intérieur ;
- le corps cylindrique du manchon de réglage comporte au moins un sillon axial dans lequel est inséré un ergot intérieur de la rondelle cannelée apte à se déplacer en translation le long du corps cylindrique ;
- le corps cylindrique du manchon de réglage comporte une rainure circonférentielle positionnée à au moins la distance « d » de la contre-cannelure et adaptée à recevoir les ergots intérieurs de la rondelle cannelée qui peut alors pivoter par rapport au manchon de réglage en s'engageant dans la rainure circonférentielle;
- la rondelle cannelée et la contre-cannelure sont en matériau métallique, et
- la rondelle cannelée présente des stries radiales qui s'emboitent sur la contre-cannelure.

L'invention se rapporte également à une attache de fixation comportant des moyens de réglage selon deux axes perpendiculaires entre eux, chacun de ces moyens de réglage étant équipé de dispositif de blocage sécurisé défini ci-dessus.

Avantageusement, cette fixation à deux axes de réglage permet de réaliser rapidement le réglage de la fixation selon deux directions dans un espace réduit.

L'invention se rapporte également à un système mécanique d'ouverture/fermeture d'ouvrant comportant un bras relié à un encadrement par deux attaches de fixation telles que définies ci-dessus.

L'objet de l'invention porte également sur un procédé d'installation d'un ouvrant sur un encadrement utilisant un tel système mécanique d'ouverture/fermeture comportant au moins un dispositif de blocage sécurisé de réglage tel que défini ci-dessus. L'installation se déroule selon les étapes suivantes :
- fixation du système mécanique d'ouverture/fermeture de l'ouvrant sur l'encadrement ;
- positionnement initial de l'ouvrant dans l'encadrement ;
- assemblage de l'ouvrant sur le système mécanique d'ouverture/fermeture, et
- réglage des attaches de fixations.

Chaque réglage des attaches de fixations se déroule selon les étapes suivantes :
- désengagement de la rondelle cannelée de la contre-cannelure ;
- maintien de la rondelle cannelée en position déverrouillée ;
- réglage de l'attache de fixation en actionnant l'extrémité de réglage ;
- libération de la rondelle cannelée, et
- vérification de l'engagement de la rondelle cannelée dans la contre-cannelure.

Avantageusement, le réglage de la fixation est rapide et simple à réaliser, en s'affranchissant en particulier d'outils de serrage. De plus l'engagement de la rondelle cannelée dans la contre-cannelure est automatique : si l'engagement n'est pas réalisé, une légère rotation du manchon de réglage permet de passer par une position où les cannelures sont en vis-à-vis et s'engagent sous l'effet du moyen de rappel.

Selon certaines formes de mise en œuvre privilégiées, prises seule ou en combinaison :
- l'étape de désengagement de la rondelle cannelée de la contre-cannelure est réalisée par une translation de la rondelle cannelée dans le sillon axial en opposition au moyen de rappel ;
- l'étape de maintien de la rondelle cannelée en position libérée est réalisée par une rotation de la rondelle cannelée dans la rainure circonférentielle du manchon de réglage, et
- l'étape de libération de la rondelle cannelée est réalisée par une rotation inverse de la rondelle cannelée dans la rainure circonférentielle du manchon de réglage.

### PRESENTATION DES FIGURES

D'autres caractéristiques et avantages de la présente invention ressortiront à la lecture qui suit d'un exemple de réalisation détaillé sans en limiter la portée, en référence aux figures annexées qui représentent, respectivement :
- la figure 1, une vue éclatée en perspective de l'ensemble des éléments de l'attache de fixation ;
- la figure 2, une vue éclatée en perspective d'éléments de réglages de l'attache de fixation ;
- la figure 3, une vue éclatée selon une autre perspective des éléments de réglages de l'attache de fixation ;
- la figure 4, une vue de chacune des faces de la rondelle cannelée ;
- la figure 5, une vue en perspective de la rondelle cannelée insérée dans le manchon ;
- la figure 6a et la figure 6b, une vue en perspective et une vue en coupe du dispositif de blocage sécurisé en configuration de vol ;
- la figure 7a et la figure 7b, une vue en perspective et une vue en coupe du dispositif de blocage sécurisé pendant la translation de la rondelle cannelée ;
- la figure 8a et la figure 8b, une vue en perspective et une vue en coupe du dispositif de blocage sécurisé en configuration de réglage ;
- la figure 9, une vue en perspective d'une attache de fixation à deux directions de réglage, et
- la figure 10, une vue en perspective d'un système d'ouverture/fermeture de porte avec deux attaches de fixation chacune avec deux directions de réglage.

### DESCRIPTION DETAILLEE

Sur les figures, des signes de référence identiques renvoient à un même élément ainsi qu'aux passages de la description correspondants.

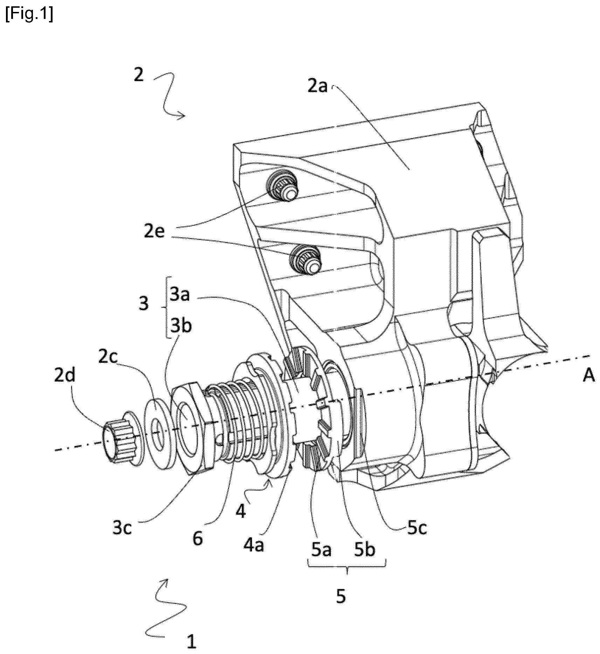

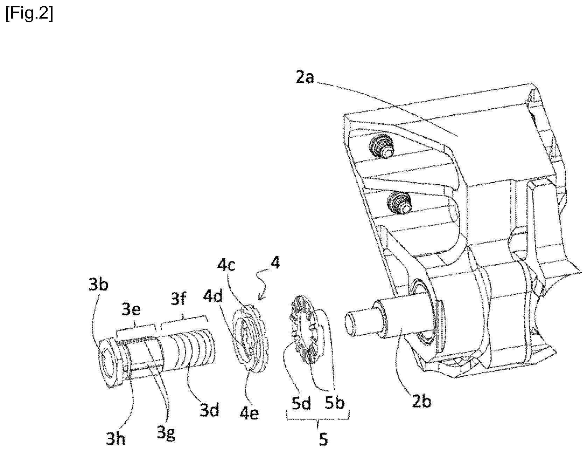

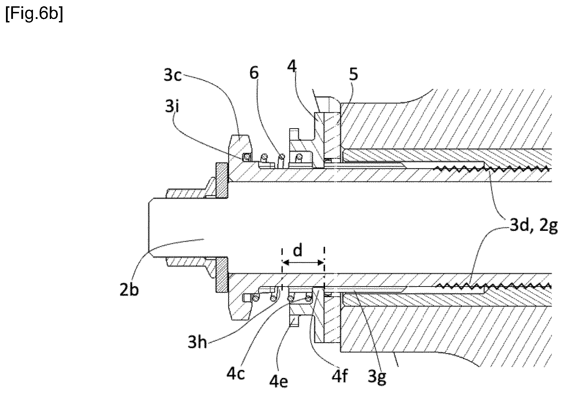

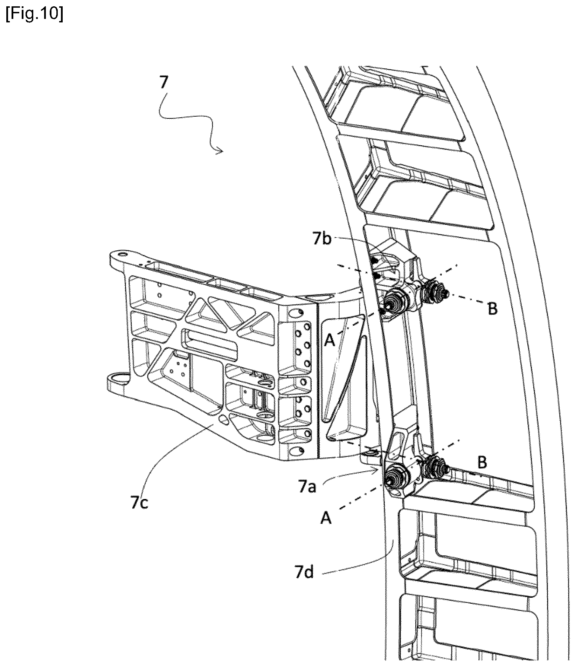

La figure 1 montre une vue éclatée d'un exemple selon l'invention de dispositif de blocage sécurisé 1 d'un système de réglage d'une attache de fixation 2 de porte. Cette attache de fixation est reliée par des vis 2e à un encadrement 7d (représenté en figure 10) et comporte une tige 2b (représenté en figure 2) ainsi qu'un support 2a sur lequel sont placées les vis 2e. La tige 2b est enfichée dans le manchon de réglage 3 selon un axe A et solidaire en translation de ce manchon de réglage 3 par une rondelle 2c et un écrou de serrage 2d. Le manchon de réglage 3 présente :
- un corps cylindrique 3a avec filetage extérieur 3d (représenté en figure 2) en vis-à-vis d'un filetage intérieur 2g du support 2a (représenté en figure 6b), et
- une extrémité 3b de réglage dont la rotation entraine la translation du manchon de réglage 3.
L'extrémité 3b de réglage présente une tête 3c en forme d'écrou dont la rotation par un outil de type clé à molette classique engage les filetages du corps cylindrique 3a et du support 2a. Cet engagement dans la liaison hélicoïdale des filetages transforme la rotation de la tête 3c en déplacement du manchon de réglage 3 dans le support 2a dans la direction de l'axe A.

De plus, le dispositif de blocage 1 comporte une rondelle cannelée 4 en translation le long de l'axe A de chaque manchon de réglage 3. Un ressort 6 en appui contre l'extrémité de réglage 3b du manchon de réglage 3 maintient alors la rondelle cannelée 4 au contact de la contre-cannelure 5. Cette contre-cannelure 5 est adaptée pour présenter une configuration géométrique - à savoir des moulures radiales 5a - complémentaire à la configuration de la rondelle cannelée 4 - formée par des stries radiales 4a - afin de réaliser leur emboitement.

La contre-cannelure 5 est également solidaire du support 2. En effet, pour maintenir le réglage de l'attache de fixation 2, c'est-à-dire pour maintenir la longueur du manchon de réglage 3 engagée dans le support 2a, la contre-cannelure 5 réalise une référence de réglage et sa position angulaire autour de l'axe A reste constante. Pour y parvenir, la contre-cannelure 5 présente dans cet exemple deux oreilles 5b qui s'insèrent chacune dans une baie 5c usinée dans le support 2a. Le contact entre les oreilles 5b et les baies 5c est réalisé dans un plan adapté à bloquer la rotation de la contre-cannelure 5 par rapport au support 2a.

Alternativement au ressort, tout moyen de rappel tel qu'un ressort à lame, un système magnétique, électrique ou pneumatique peut être utilisé pour maintenir la rondelle cannelée dans la contre-cannelure. De plus des géométries de stries non radiales, des picots et de façon générale toute géométrie permettant d'emboiter la rondelle cannelée à la contre-cannelure peut être utilisée. Également, le blocage en translation du manchon par rapport à la tige peut être réalisé par tout moyen de blocage, comme par soudure ou avec un pion de blocage.

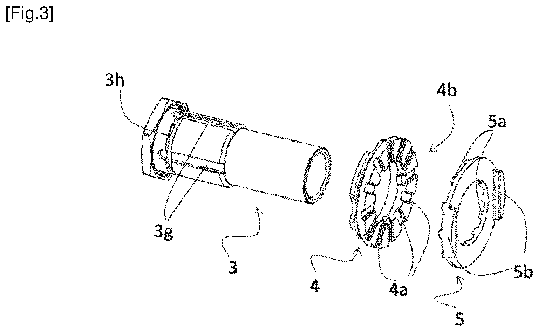

Les vues éclatées de la figure 2, qui est une vue simplifiée de la figure 1, et de la figure 3 représentent le manchon de réglage 3, la rondelle cannelée 4 et la contre-cannelure 5. Le support 2a avec la tige 2b est également visible dans la figure 2.

Dans ces figures 2 et 3, le corps cylindrique 3a du manchon de réglage 3 est détaillé. Celui-ci comporte une extrémité de réglage 3b, une section intermédiaire 3e avec des rainures et une section distale 3f avec un filetage extérieur 3d. Dans cet exemple de réalisation, le manchon de réglage 3 est en matériau métallique, des sillons axiaux 3g et une rainure circonférentielle 3h étant usinées dans la section intermédiaire 3e. La rondelle cannelée 4 et la contre- cannelure 5 sont également en matériaux métalliques. Alternativement pour des applications autres que le blocage des attaches de fixation d'une porte d'aéronef, ces pièces peuvent être moulées en plastique ou réalisés en matériaux composites.

La rondelle cannelée 4 présente deux faces :
- une face 4b avec les stries 4a en vis-à-vis de la face 5d de la contre-cannelure 5, cette face 5b portant les moulures radiales 5a géométriquement complémentaires des stries 4a, et
- une face 4c réalisant une surface d'appui 4d du ressort de compression 6 et comportant une collerette de traction 4e.

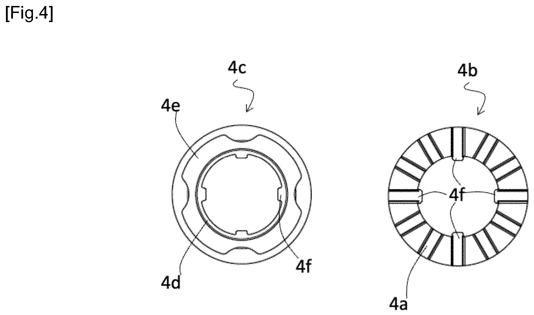

En outre, la figure 4 montre des vues des faces 4b et 4c de la rondelle cannelée 4. La face 4c comporte en particulier la collerette de traction 4e qui permet de tirer sur la rondelle cannelée 4 pour la séparer de la contre-cannelure 5. Certaines stries de la face 4b s'étendent vers le centre de la rondelle cannelée 4 et forment quatre ergots intérieurs 4f qui guident la rondelle cannelée 4 en translation le long du manchon de réglage 3. Alternativement, le nombre d'ergots et la géométrie de la collerette peuvent varier en fonction du niveau de contraintes exercées sur la rondelle cannelée.

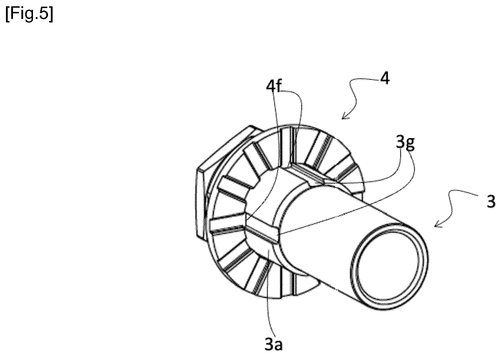

Le manchon de réglage 3 positionné dans la rondelle cannelée 4 est représenté en figure 5. Sur cette figure, il apparaît que le corps 3a du manchon de réglage 3 comporte le long de son axe quatre sillons axiaux 3g, un ergot intérieur 4f de la rondelle cannelée 4 étant inséré dans chacun de ces sillons axiaux 3g. Ce montage rend alors cette rondelle apte à se déplacer en translation le long du manchon de réglage 3. De plus, ces ergots intérieurs 4f bloquent la rotation de la rondelle cannelée 4 par rapport au manchon de réglage 3.

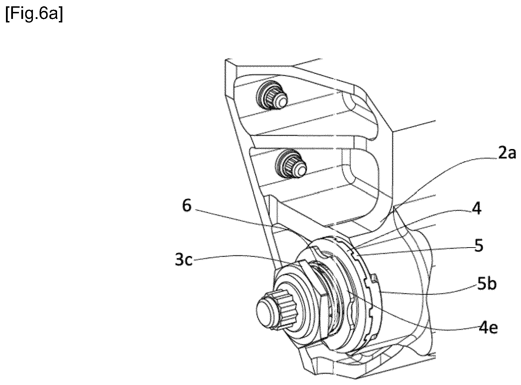

La figure 6a et la figure 6b illustrent une vue respectivement en perspective et en coupe du dispositif de blocage sécurisé de réglage en position de blocage. Dans cette position, la rondelle cannelée 4 est emboitée et engagée dans la contre-cannelure 5. La rondelle cannelée 4 est également solidaire en rotation par rapport au manchon de réglage 3 et sécurisée par la poussée du ressort de compression 6 qui est en appui d'une part dans le creux 3i de la tête 3c du manchon de réglage 3 et d'autre part contre la face 4c de la rondelle cannelée 4. La contre-cannelure 5 est également encastrée dans le support 2a par les oreilles 5b qui s'insèrent dans le support 2a et bloquent la rotation de la contre-cannelure 5.

Dans la figure 6b, la liaison entre le filetage extérieur 3d du manchon de réglage 3 et le filetage intérieur 2g du support 2a est représentée. Cette liaison permet de réaliser le réglage de l'attache de fixation 2 en convertissant la rotation de la tête 3c du manchon de réglage 3 en translation de ce manchon dans l'attache de fixation 2. Cette translation ajuste et règle la position de la tige 2b dans l'attache de fixation 2.

La coupe de la figure 6b, qui est réalisée au niveau des sillons axiaux 3g et des ergots intérieurs 4f, montre que la rondelle cannelée 4 est mobile le long du manchon de réglage 3 par glissement des ergots intérieurs 4f dans les sillons axiaux 3g entre la position de blocage et une position libérée. Dans cette position libérée, la rondelle cannelée 4 est immobilisé à une distance « d » de la contre-cannelure 5, cette distance étant suffisante pour s'affranchir du contact entre la rondelle cannelée 4 et la contre-cannelure 5 tout en permettant la rotation du manchon de réglage 3 par rapport au support 2a. De plus, à cette distance « d » est positionnée la rainure circonférentielle 3h qui est adaptée à recevoir les ergots intérieurs 4f.

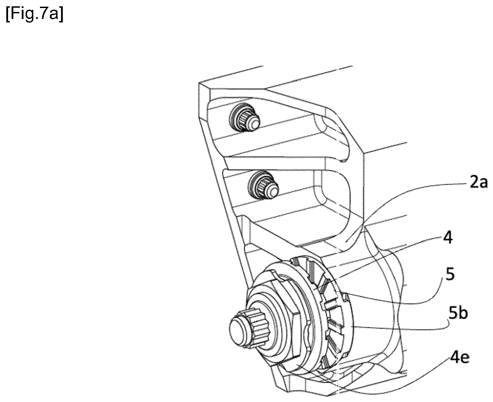

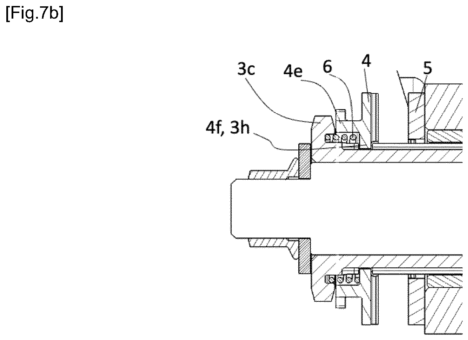

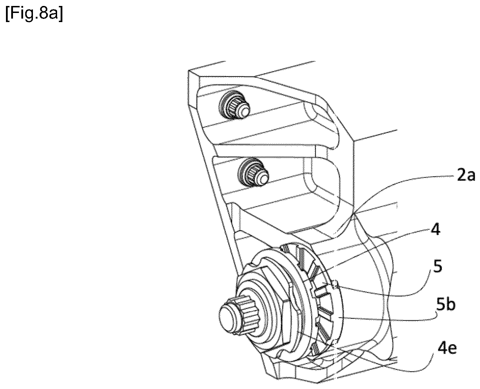

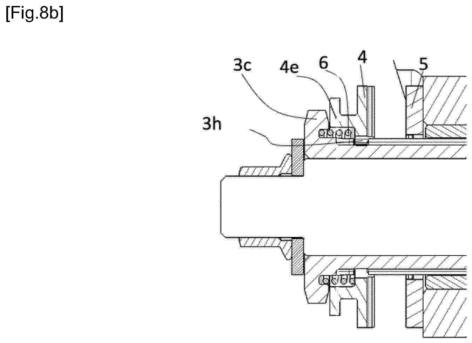

La figure 7a et la figure 7b représentent une vue respectivement en perspective et en coupe du dispositif de blocage sécurisé de réglage lorsque la rondelle cannelée 4 est en fin de translation le long des sillons axiaux 3g. La collerette de traction 4e est en butée sur la tête 3c du manchon de réglage 3 et les ergots intérieurs 4f entrent dans la rainure circonférentielle 3h. La rondelle cannelée 4 peut alors pivoter par rapport au manchon de réglage 3 par glissement et engagement des ergots intérieurs 4f dans la rainure circonférentielle 3h, comme illustré dans la figure 8a et figure 8b. Les ergots intérieurs 4f ne sont donc plus dans les sillons axiaux 3g et la rondelle cannelée 4 ne peut plus se déplacer le long du manchon de réglage 3. La rondelle cannelée 4 est alors maintenue dans la rainure circonférentielle 3h par l'action combinée du ressort de compression 6, qui pousse la rondelle cannelée 4 en direction de la contre-cannelure 5, et des ergots intérieurs 4f qui sont en butée dans la rainure circonférentielle 3h.

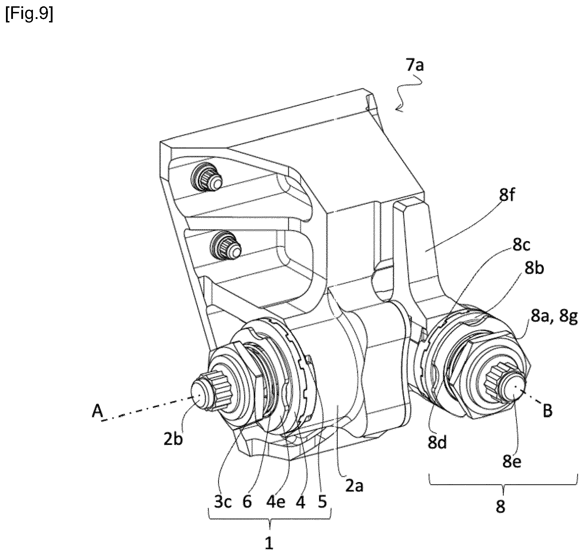

La figure 9 montre une attache de fixation 7a qui comporte deux moyens de réglages selon deux axes A et B perpendiculaires entre eux. Chacun de ces moyens de réglage est équipé, selon l'axe A, du dispositif de blocage sécurisé 1 décrit précédemment et, selon l'axe B, du dispositif de blocage sécurisé 8. Ce dispositif comporte également un manchon de réglage 8a avec une extrémité de réglage 8g, une rondelle cannelée 8b, une contre-cannelure 8c, un ressort de compression 8d, une tige 8e et un support 8f.

Le fonctionnement des dispositifs de blocage sécurisé 1 et 8 est similaire : la rondelle cannelée 8b est mobile entre une position de blocage et une position libérée. Le réglage dans la direction de l'axe B est réalisé par rapport au support 8f qui est solidaire de la tige 2b de réglage dans la direction de l'axe A. Avantageusement, cette combinaison du support 8f avec la tige 2b permet de réaliser et de simplifier les réglages selon les directions des axes A et B en limitant le nombres de pièces utilisées, en rassemblant ces pièces sur une même attache de fixation et en utilisant le même principe de réglage.

La figure 10 illustre un système mécanique d'ouverture/fermeture 7 d'une porte d'aéronef comportant un bras 7c relié à l'encadrement de porte 7d par deux attaches de fixations 7a et 7b. Ces attaches de fixation 7a et 7b sont similaires et permettent des réglages dans les deux mêmes directions perpendiculaires selon les axes A et B.

Cette combinaison privilégiée simplifie les réglages et donne accès à d'autres réglages. En effet, chaque attache 7a, 7b utilisée individuellement permet de déplacer en translation le bras 7c dans la direction de l'axe A ou la direction de l'axe B. Or une porte d'aéronef présente une masse importe et deux attaches sont communément utilisées pour en supporter le poids. Lorsque les deux attaches 7a et 7b sont utilisées ensembles, le déplacement en translation du bras 7c dans la direction de l'axe A ou de l'axe B est simplifié en appliquant le même réglage à chacune des attaches. De plus, des possibilités de réglages supplémentaires en rotation sont accessibles en appliquant des réglages différents à chaque attache 7a, 7b. Alternativement, si les axes de réglages des attaches 7a et 7b sont différents, l'ensemble des réglages du bras 7c en translation et en rotation sont toujours réalisables, et sont par itération.

L'installation d'une porte sur un encadrement 7d avec un système mécanique d'ouverture/fermeture 7 qui comporte quatre dispositifs de blocage sécurisé comme décrits ci-dessus, se déroule selon les étapes suivantes :
- fixation du système mécanique d'ouverture/fermeture 7 de la porte sur l'encadrement 7d ;
- positionnement initial de la porte dans l'encadrement 7d;
- assemblage de la porte sur le système mécanique d'ouverture/fermeture 7, et
- réglage des attaches de fixations 7a et 7b.
Chaque réglage des attaches de fixations 7a et 7b se déroule alors selon les étapes suivantes :
- désengagement de la rondelle cannelée de la contre-cannelure ;
- maintien de la rondelle cannelée en position déverrouillée ;
- réglage de l'attache de fixation en actionnant l'extrémité de réglage ;
- libération de la rondelle cannelée, et
- vérification de l'engagement de la rondelle cannelée dans la contre-cannelure.

Dans un exemple de mise en œuvre:
- l'étape de désengagement de la rondelle cannelée de la contre-cannelure est réalisée par une translation de la rondelle cannelée dans le sillon axial en opposition à la direction d'action du ressort de compression ;
- l'étape de maintien de la rondelle cannelée en position libérée est réalisée par une rotation de la rondelle cannelée dans la rainure circonférentielle du manchon de réglage, et
- l'étape de libération de la rondelle cannelée est réalisée par une rotation inverse de la rondelle cannelée dans la rainure circonférentielle du manchon de réglage jusqu'à un positionnement des ergots intérieurs à l'entrée des sillons axiaux.

Alternativement, le sillon axial peut être hélicoïdal et la rondelle cannelée suit une cinématique hélicoïdale à la place de la translation. Alternativement également, le maintien de la rondelle cannelée en position déverrouillée peut être réalisé par tout moyen de blocage comme un pion d'arrêt ou un crochet.

Le blocage sécurisé du réglage est mis en œuvre par la combinaison de deux blocages en rotation :
- un premier blocage entre les moulures de la contre-cannelure et les stries de la rondelle cannelée, et
- un deuxième blocage entre les ergots intérieurs de la rondelle cannelée et les sillons axiaux du manchon de réglage.

Alternativement, tout autre moyen de blocage en rotation cité précédemment peut également être utilisé entre la contre-cannelure et la rondelle cannelée, ainsi qu'entre la rondelle cannelée et le manchon de réglage.

## Revendications

1. Attache de fixation (2, 7a, 7b) pour un ouvrant **,** avec un système de réglage (1) et un dispositif de blocage sécurisé du système de réglage (1), cette attache de fixation (2, 7a, 7b) étant adaptée pour être reliée à un encadrement (7d) par un support (2a) de ladite attache de fixation (2, 7a, 7b), ladite attache de fixation comportant au moins une tige (2b), chaque tige (2b) étant enfichée dans un manchon de réglage (3) et solidaire de ce manchon de réglage (3) par un moyen de blocage en translation, chaque manchon de réglage (3) présentant :
- un corps cylindrique (3a) avec un filetage extérieur (3d) en vis-à-vis d'un filetage intérieur (2g) du support (2a), et
- une extrémité de réglage (3b) en rotation ;
le dispositif de blocage sécurisé (1) étant **caractérisé en ce qu'**il comporte une rondelle cannelée (4) en translation le long de chaque manchon de réglage (3) ainsi qu'un moyen de rappel qui est relié à l'extrémité de réglage (3b) et qui maintient la rondelle cannelée (4) au contact d'une contre-cannelure (5) solidaire du support (2a) d'attache et de configuration complémentaire à la rondelle cannelée (4), cette rondelle étant mobile entre :
- une position de blocage sécurisé dans laquelle la rondelle cannelée (4) est engagée dans la contre-cannelure (5), solidaire en rotation par rapport au manchon de réglage (3) et sécurisée par une poussée du moyen de rappel , et
- une position libérée qui immobilise la rondelle cannelée (4) à une distance d de la contre-cannelure (5).

2. Attache de fixation (2, 7a, 7b) avec le dispositif de blocage sécurisé (1) selon la revendication précédente, dans laquelle le moyen de rappel est un ressort de compression (6) en appui sur l'extrémité de réglage (3b) du manchon de réglage (3).

3. Attache de fixation (2, 7a, 7b) avec le dispositif de blocage sécurisé (1) selon la revendication 2 dans laquelle la rondelle cannelée (4) comporte une surface d'appui (4d) du ressort de compression (6).

4. Attache de fixation (2, 7a, 7b) avec le dispositif de blocage sécurisé (1) selon la revendication 3, dans laquelle la surface d'appui (4d) de la rondelle cannelée (4) comporte une collerette de traction (4e).

5. Attache de fixation (2, 7a, 7b) avec le dispositif de blocage sécurisé (1) selon l'une quelconque de la revendication 1 à la revendication 4, dans laquelle la rondelle cannelée (4) comporte au moins un ergot intérieur (4f).

6. Attache de fixation (2, 7a, 7b) avec le dispositif de blocage sécurisé (1) selon la revendication 5, dans laquelle le corps cylindrique (3a) du manchon de réglage (3) comporte au moins un sillon axial (3g) dans lequel est inséré un ergot intérieur (4f) de la rondelle cannelée (4) qui est apte à se déplacer en translation le long du corps cylindrique (3a).

7. Attache de fixation (2, 7a, 7b) avec le dispositif de blocage sécurisé (1) selon l'une quelconque de la revendication 5 à la revendication 6, dans laquelle le corps cylindrique (3e) du manchon de réglage (3) comporte une rainure circonférentielle (3h) positionnée à au moins la distance d de la contre-cannelure (5) et adaptée à recevoir les ergots intérieurs (4f) de la rondelle cannelée (4).

8. Attache de fixation (2, 7a, 7b) avec le dispositif de blocage sécurisé (1) selon l'une quelconque de la revendication 1 à la revendication 7, dans laquelle la rondelle cannelée (4) et la contre-cannelure (5) sont en matériau métallique.

9. Attache de fixation (2, 7a, 7b) avec le dispositif de blocage sécurisé (1) selon l'une quelconque de la revendication 1 à la revendication 8, dans laquelle la rondelle cannelée (4) présente des stries radiales qui s'emboitent sur la contre-cannelure (5).

10. Attache de fixation (7a, 7b) selon l'une quelconque des revendications précédentes, comportant des moyens de réglage selon deux axes A et B perpendiculaires entre eux , caractérisée en ce chacun des moyens de réglage est équipé d'un dispositif de blocagettesécurisé (1) , chacun des moyens de réglage et son dispositif de blocage sécurisé associé étant conforme à ceux définis dans l'attache de fixation selon l'une quelconque des revendications précédentes.

11. Système mécanique d'ouverture/fermeture (7) d'un ouvrant comportant un bras (7c) et l'encadrement (7d) **caractérisé en ce qu'**il est relié à l'encadrement (7d) par deux attaches de fixation (7a, 7b) selon la revendication 10.

12. Procédé d'installation d'un ouvrant sur l'encadrement (7d) avec un système mécanique d'ouverture/fermeture (7) selon la revendication 11 comportant au moins un dispositif de blocage sécurisé de réglage réalisé selon les étapes suivantes :
- fixation du système mécanique d'ouverture/fermeture (7) de l'ouvrant sur l'encadrement (7d) ;
- positionnement initial de l'ouvrant dans l'encadrement (7d) ;
- assemblage de l'ouvrant sur le système mécanique d'ouverture/fermeture (7), et
- réglage des attaches de fixations (7a, 7b)
cette installation étant **caractérisée en ce que** le réglage des attaches de fixations (7A, 7b) se déroule selon les étapes suivantes :
- désengagement de la rondelle cannelée (4, 8b) de la contre-cannelure (5, 8c) ;
- maintien de la rondelle cannelée (4, 8b) en position déverrouillée ;
- réglage de l'attache de fixation (7a, 7b) en actionnant l'extrémité de réglage (3b, 8g) ;
- libération de la rondelle cannelée (4, 8b), et
- vérification de l'engagement de la rondelle cannelée (4, 8b) dans la contre-cannelure (5, 8c).

13. Procédé d'installation selon la revendication 12 s'appliquant à un dispositif selon la revendication 6 dans lequel l'étape de désengagement de la rondelle cannelée (4, 8b) de la contre-cannelure (5, 8c) est réalisé par une translation de la rondelle cannelée (4, 8b) dans le sillon axial (3g) en opposition au moyen de rappel.

14. Procédé d'installation selon l'une quelconque de la revendication 12 à la revendication 13 s'appliquant à un dispositif selon la revendication 7 dans lequel l'étape de maintien de la rondelle cannelée (4, 8b) en position libérée est réalisée par une rotation de la rondelle cannelée (4, 8b) dans la rainure circonférentielle (3h) du manchon de réglage (3).

15. Procédé d'installation selon l'une quelconque de la revendication 12 à la revendication 14 en s'appliquant à un dispositif selon la revendication 7 dans lequel l'étape de libération de la rondelle cannelée (4, 8b) est réalisée par une rotation inverse de la rondelle cannelée (4, 8b) dans la rainure circonférentielle (3h) du manchon de réglage (3).

## Patentansprüche

1. Befestigungselement (2, 7a, 7b) für ein Öffnungselement, mit einem Verstellsystem (1) und einer Vorrichtung zur sicheren Verriegelung des Verstellsystems (1), wobei dieses Befestigungselement (2, 7a, 7b) dazu eingerichtet ist, mit einem Rahmen (7d) durch einen Halter (2a) des Befestigungselements (2, 7a, 7b) verbunden zu werden, wobei das Befestigungselement mindestens eine Stange (2b) umfasst, wobei jede Stange (2b) in eine Verstellhülse (3) eingesteckt und mit dieser Verstellhülse (3) durch ein Verschiebungssicherungsmittel fest verbunden ist, wobei jede Verstellhülse (3) aufweist:
- einen zylindrischen Körper (3a) mit einem Außengewinde (3d), das einem Innengewinde (2g) des Halters (2a) gegenüberliegt, und
- ein Drehverstellende (3b);
wobei die Vorrichtung zur sicheren Verriegelung (1) **dadurch gekennzeichnet ist, dass** sie eine Riffelscheibe (4) umfasst, die entlang jeder Verstellhülse (3) verschiebbar ist, sowie ein Rückstellmittel, das mit dem Verstellende (3b) verbunden ist und das die Riffelscheibe (4) in Kontakt mit einer Gegenriffelung (5) hält, die mit dem Halter (2a) des Befestigungselements fest verbunden ist und eine zu der Riffelscheibe (4) komplementäre Konfiguration aufweist, wobei diese Scheibe beweglich ist zwischen:
- einer Position der sicheren Verriegelung, in welcher die Riffelscheibe (4) mit der Gegenriffelung (5) im Eingriff steht, drehfest in Bezug auf die Verstellhülse (3) ist und durch einen Druck des Rückstellmittels gesichert ist, und
- einer freigegebenen Position, welche die Riffelscheibe (4) in einem Abstand d von der Gegenriffelung (5) fixiert.

2. Befestigungselement (2, 7a, 7b) mit der Vorrichtung zur sicheren Verriegelung (1) nach dem vorhergehenden Anspruch, wobei das Rückstellmittel eine Druckfeder (6) ist, die am Verstellende (3b) der Verstellhülse (3) anliegt.

3. Befestigungselement (2, 7a, 7b) mit der Vorrichtung zur sicheren Verriegelung (1) nach Anspruch 2, wobei die Riffelscheibe (4) eine Anlagefläche (4d) für die Druckfeder (6) umfasst.

4. Befestigungselement (2, 7a, 7b) mit der Vorrichtung zur sicheren Verriegelung (1) nach Anspruch 3, wobei die Anlagefläche (4d) der Riffelscheibe (4) einen Zugflansch (4e) umfasst.

5. Befestigungselement (2, 7a, 7b) mit der Vorrichtung zur sicheren Verriegelung (1) nach einem der Ansprüche 1 bis 4, wobei die Riffelscheibe (4) mindestens einen inneren Nocken (4f) umfasst.

6. Befestigungselement (2, 7a, 7b) mit der Vorrichtung zur sicheren Verriegelung (1) nach Anspruch 5, wobei der zylindrische Körper (3a) der Verstellhülse (3) mindestens eine axiale Rille (3g) umfasst, in die ein innerer Nocken (4f) der Riffelscheibe (4) eingesetzt ist, der geeignet ist, sich entlang des zylindrischen Körpers (3a) translatorisch zu bewegen.

7. Befestigungselement (2, 7a, 7b) mit der Vorrichtung zur sicheren Verriegelung (1) nach einem der Ansprüche 5 bis 6, wobei der zylindrische Körper (3e) der Verstellhülse (3) eine Umfangsnut (3h) aufweist, die in mindestens dem Abstand d von der Gegenriffelung (5) positioniert ist und dazu eingerichtet ist, die inneren Nocken (4f) der Riffelscheibe (4) aufzunehmen.

8. Befestigungselement (2, 7a, 7b) mit der Vorrichtung zur sicheren Verriegelung (1) nach einem der Ansprüche 1 bis 7, wobei die Riffelscheibe (4) und die Gegenriffelung (5) aus metallischem Material bestehen.

9. Befestigungselement (2, 7a, 7b) mit der Vorrichtung zur sicheren Verriegelung (1) nach einem der Ansprüche 1 bis 8, wobei die Riffelscheibe (4) radiale Streifen aufweist, die in die Gegenriffelung (5) einrasten.

10. Befestigungselement (7a, 7b) nach einem der vorhergehenden Ansprüche, welches Mittel zur Verstellung entlang zweier zueinander senkrechter Achsen A und B umfasst, **dadurch gekennzeichnet, dass** jedes der Verstellmittel mit einer Vorrichtung zur sicheren Verriegelung (1) ausgestattet ist, wobei jedes der Verstellmittel und seine zugeordnete Vorrichtung zur sicheren Verriegelung denjenigen entsprechen, die für das Befestigungselement nach einem der vorhergehenden Ansprüche definiert sind.

11. Mechanisches System zum Öffnen/Schließen (7) eines Öffnungselements, welches einen Arm (7c) und den Rahmen (7d) umfasst, **dadurch gekennzeichnet, dass** es mit dem Rahmen (7d) durch zwei Befestigungselemente (7a, 7b) nach Anspruch 10 verbunden ist.

12. Verfahren zum Einbau eines Öffnungselements in den Rahmen (7d) mit einem mechanischen System zum Öffnen/Schließen (7) nach Anspruch 11, das mindestens eine Vorrichtung zur sicheren Verriegelung der Einstellung umfasst, welches gemäß den folgenden Schritten durchgeführt wird:
- Befestigung des mechanischen Systems zum Öffnen/Schließen (7) des Öffnungselements am Rahmen (7d);
- anfängliche Positionierung des Öffnungselements im Rahmen (7d);
- Montage des Öffnungselements an dem mechanischen System zum Öffnen/Schließen (7), und
- Einstellung der Befestigungselemente (7a, 7b),
wobei dieser Einbau **dadurch gekennzeichnet ist, dass** die Einstellung der Befestigungselemente (7a, 7b) gemäß den folgenden Schritten erfolgt:
- Lösen der Riffelscheibe (4, 8b) von der Gegenriffelung (5, 8c);
- Halten der Riffelscheibe (4, 8b) in der entriegelten Position;
- Einstellung des Befestigungselements (7a, 7b) durch Betätigen des Verstellendes (3b, 8g);
- Freigabe der Riffelscheibe (4, 8b), und
- Überprüfung des Eingriffs der Riffelscheibe (4, 8b) in die Gegenriffelung (5, 8c).

13. Verfahren zum Einbau nach Anspruch 12, welches auf eine Vorrichtung nach Anspruch 6 angewandt wird, wobei der Schritt des Lösens der Riffelscheibe (4, 8b) von der Gegenriffelung (5, 8c) durch eine Verschiebung der Riffelscheibe (4, 8b) in der axialen Rille (3g) entgegen der Kraft des Rückstellmittels durchgeführt wird.

14. Verfahren zum Einbau nach einem der Ansprüche 12 bis 13, welches auf eine Vorrichtung nach Anspruch 7 angewandt wird, wobei der Schritt des Haltens der Riffelscheibe (4, 8b) in der freigegebenen Position durch eine Drehung der Riffelscheibe (4, 8b) in der Umfangsnut (3h) der Verstellhülse (3) durchgeführt wird.

15. Verfahren zum Einbau nach einem der Ansprüche 12 bis 14, welches auf eine Vorrichtung nach Anspruch 7 angewandt wird, wobei der Schritt der Freigabe der Riffelscheibe (4, 8b) durch eine entgegengesetzte Drehung der Riffelscheibe (4, 8b) in der Umfangsnut (3h) der Verstellhülse (3) durchgeführt wird.

## Claims

1. Attachment (2, 7a, 7b) for an opening panel, with an adjustment system (1) and a secure locking device of the adjustment system (1), this attachment (2, 7a, 7b) being adapted to be connected to a frame (7d) by a support (2a) of said attachment (2, 7a, 7b) and comprising at least one rod (2b), each rod (2b) being inserted into an adjustment sleeve (3) and integral with this adjustment sleeve (3) by means of a translational locking means, each adjustment sleeve (3) comprising:
- a cylindrical body (3a) with an external thread (3d) facing an internal thread (2g) of the support (2a); and
- a rotating adjustment end (3b);
the secure locking device (1) being **characterised in that** it comprises a grooved washer (4) in translation along each adjustment sleeve (3), as well as a return means which is connected to the adjustment end (3b) and which maintains the grooved washer (4) in contact with a counter-groove (5) integral with the support (2a) of the attachment and of complementary configuration to the grooved washer (4), this washer being movable between:
- a secure locking position in which the grooved washer (4) is engaged in the counter-groove (5), rotationally secured relative to the adjustment sleeve (3) and held by a push of the return means; and
- a released position which immobilises the grooved washer (4) at a distance d from the counter-groove (5).

2. Attachment (2, 7a, 7b) with a secure locking device (1) according to the preceding claim, wherein the return means is a compression spring (6) bearing on the adjustment end (3b) of the adjustment sleeve (3).

3. Attachment (2, 7a, 7b) with a secure locking device (1) according to claim 2, wherein the grooved washer (4) comprises a bearing surface (4d) for the compression spring (6).

4. Attachment (2, 7a, 7b) with a secure locking device (1) according to claim 3, wherein the bearing surface (4d) of the grooved washer (4) comprises a traction collar (4e).

5. Attachment (2, 7a, 7b) with a secure locking device (1) according to any one of claims 1 to 4, wherein the grooved washer (4) comprises at least one internal protrusion (4f).

6. Attachment (2, 7a, 7b) with a secure locking device (1) according to claim 5, wherein the cylindrical body (3a) of the adjustment sleeve (3) comprises at least one axial slot (3g) in which is inserted an internal protrusion (4f) of the grooved washer (4) which is able to move in translation along the cylindrical body (3a).

7. Attachment (2, 7a, 7b) with a secure locking device (1) according to any one of claims 5 to 6, wherein the cylindrical body (3e) of the adjustment sleeve (3) comprises a circumferential channel (3h) positioned at least at the distance d from the counter-groove (5) and adapted to receive the internal protrusions (4f) of the grooved washer (4).

8. Attachment (2, 7a, 7b) with a secure locking device (1) according to any one of claims 1 to 7, wherein the grooved washer (4) and the counter-groove (5) are made of metallic material.

9. Attachment (2, 7a, 7b) with a secure locking device (1) according to any one of claims 1 to 8, wherein the grooved washer (4) has radial striations which fit onto the counter-groove (5).

10. Attachment (7a, 7b) according to any one of the preceding claims, comprising adjustment means along two axes A and B perpendicular to each other, **characterised in that** each of the adjustment means is equipped with a secure locking device (1), each of the adjustment means and its associated secure locking device being in accordance with those defined in the attachment according to any one of the preceding claims.

11. Mechanical opening/closing system (7) of an opening panel comprising an arm (7c) and the frame (7d), **characterised in that** it is connected to the frame (7d) by two attachments (7a, 7b) according to claim 10.

12. Method of installing an opening panel on the frame (7d) with a mechanical opening/closing system (7) according to claim 11 comprising at least one secure adjustment locking device, carried out according to the following steps:
- attaching the mechanical opening/closing system (7) of the opening panel on the frame (7d);
- initial positioning of the opening panel in the frame (7d);
- assembling the opening panel on the mechanical opening/closing system (7); and
- adjusting the attachments (7a, 7b);
this installation being **characterised in that** the adjustment of the attachments (7a, 7b) takes place according to the following steps:
- disengagement of the grooved washer (4, 8b) from the counter-groove (5, 8c);
- holding the grooved washer (4, 8b) in the unlocked position;
- adjustment of the attachment (7a, 7b) by operating the adjustment end (3b, 8g);
- release of the grooved washer (4, 8b); and
- checking the engagement of the grooved washer (4, 8b) in the counter-groove (5, 8c).

13. Installation method according to claim 12, applied to an attachment according to claim 6, wherein the step of disengaging the grooved washer (4, 8b) from the counter-groove (5, 8c) is carried out by a translation of the grooved washer (4, 8b) in the axial slot (3g) in opposition to the return means.

14. Installation method according to any one of claims 12 to 13, applied to an attachment according to claim 7, wherein the step of holding the grooved washer (4, 8b) in the released position is carried out by a rotation of the grooved washer (4, 8b) in the circumferential channel (3h) of the adjustment sleeve (3).

15. Installation method according to any one of claims 12 to 14, applied to an attachment according to claim 7, wherein the step of releasing the grooved washer (4, 8b) is carried out by a reverse rotation of the grooved washer (4, 8b) in the circumferential channel (3h) of the adjustment sleeve (3).
